# EUROPEAN PATENT SPECIFICATION

(11) **EP 2 804 510 B1**
(45) Date of publication and mention of the grant of the patent: **04.03.2020**
(21) Application number: 14742449.3
(22) Date of filing: 17.03.2014
(51) Int. Cl.: A47G 27/02, D04G 3/00, D05C 15/32

(54) **DECONSTRUCTED CARPET AND METHOD OF MANUFACTURE**
DEKONSTRUIERTER TEPPICH UND HERSTELLUNGSVERFAHREN DAFÜR
MOQUETTE DÉCONSTRUITE ET PROCÉDÉ DE FABRICATION

(30) Priority: 15.03.2013 US 201361794873 P
(43) Date of publication of application: 26.11.2014
(73) Proprietor: Shaw Industries Group, Inc., Dalton, GA 30722 (US)
(72) Inventor: DOTHARD, William, Mark, Cartersville, GA 30121 (US); RAINEY, Pamela, Managan, Cartersville, GA 30121 (US)
(74) Representative: Walker, Stephen
(86) International application number: PCT/US2014/030701
(87) International publication number: WO 2014/145865

(56) References cited:
- US-A- 2 984 889
- US-A- 4 003 698
- US-A- 4 351 691
- US-A- 5 461 996
- US-A- 5 484 639
- US-A1- 2002 164 448
- US-A1- 2004 142 141
- US-A1- 2004 253 409
- US-B1- 8 347 800

## Description

### CROSS REFERENCE TO RELATED APPLICATION

This application claims the benefit of United States Provisional Application No. 61/794,873, filed March 15, 2014.

Aspects described herein relate generally to carpet designs having an at least partially exposed primary backing layer incorporated into the carpet design and methods for manufacturing the same.

### BACKGROUND OF THE INVENTION

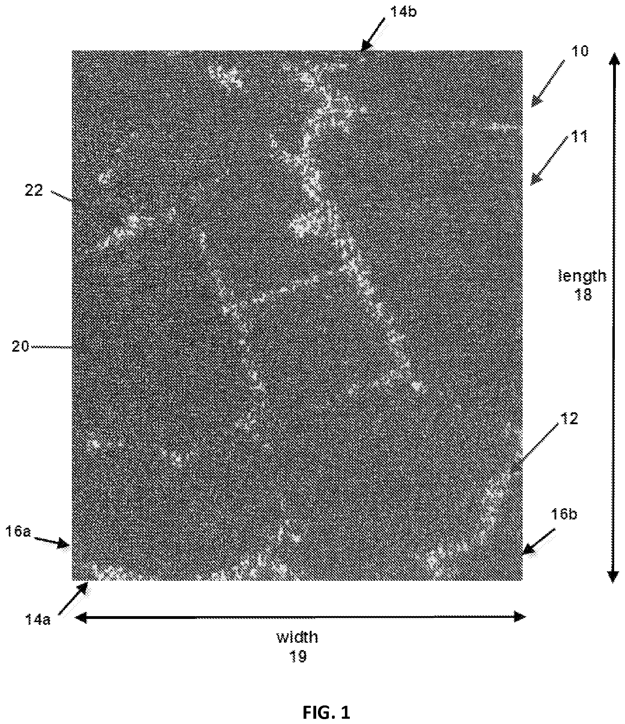

As illustrated in FIG. 1, tufted carpets generally are composite structures which include yarn (which is also known as a fiber bundle), a primary backing material having a face surface and a back surface, an adhesive backing material and, optionally, a secondary backing material. To form the face surface of tufted carpet, yarn can be tufted through the primary backing material such that the longer length of each stitch extends through the face surface of the primary backing material. Typically, the primary backing material can be made of a woven or non- woven material such as a thermoplastic polymer, most commonly polypropylene.

The face of a tufted carpet can generally be made in three ways. First, for loop pile carpet, the yarn loops formed in the tufting process can be left intact. Second, for cut pile carpet, the yarn loops can be cut, either during tufting or after, to produce a pile of single yarn ends instead of loops. Third, some carpet styles can include both loop and cut pile. One variety of this hybrid is referred to as tip-sheared carpet where loops of differing lengths can be tufted followed by shearing the carpet at a height so as to produce a mix of uncut, partially cut, and completely cut loops. Alternatively, the tufting machine can be configured so as to cut only some of the loops, thereby leaving a pattern of cut and uncut loops. Whether loop, cut, or a hybrid, the yam on the back side of the primary backing material can comprise tight, unextended loops.

The combination of tufted yarn and a primary backing material without the application of an adhesive backing material or secondary backing material is referred to in the carpet industry as raw tufted carpet or greige goods. Greige goods can become finished tufted carpet with the application of an adhesive backing material and an optional secondary backing material to the back side of the primary backing material. Finished tufted carpet can be prepared as broad-loomed carpet in rolls typically 182.88 or 365.76 cm (6 or 12 feet) wide. Alternatively, carpet can be prepared as carpet tiles in varying shapes and sizes.

A substantial demand exists for tufted carpet designs and methods of manufacture that reduce the waste produced over conventional tufted carpet manufacturing methods that make more efficient use of materials and that result in a lighter weight carpet. US-A1-2004 253409 discloses a similar carpet and method, but not the pulling of yarn tufts.

### SUMMARY

It is to be understood that this summary is not an extensive overview of the disclosure. This summary is exemplary and not restrictive, and it is intended to neither identify key or critical elements of the disclosure nor delineate the scope thereof. The sole purpose of this summary is to explain and exemplify certain concepts of the disclosure as an introduction to the following complete and extensive detailed description.

The present invention is generally directed to a deconstructed tufted carpet in which at least a portion of the primary backing is visible or at least partially visible. In aspects, deconstructed carpet can utilize the primary backing layer as a design element of the overall pattern and styling in order to reduce material use, waste and the ounce weight of the finished carpet and to improve the method of carpet construction. In one embodiment, in order to expose the primary backing, at least some yarn is pulled very low in the desired exposed member pattern areas thereby exposing a desired amount of the primary backing layer. It is contemplated that the primary backing layer can have a color that comprises part of the overall pattern and styling of the carpet.

Additional features and advantages of exemplary aspects of the disclosure will be set forth in the description which follows, and in part will be obvious from the description, or may be learned by the practice of such exemplary aspects. The features and advantages of such aspects may be realized and obtained by means of the instruments and combinations particularly pointed out in the appended claims. These and other features will become more fully apparent from the following description and appended claims, or may be learned by the practice of such exemplary aspects as set forth hereinafter.

### BRIEF DESCRIPTION OF THE DRAWINGS

The accompanying drawings, which are incorporated in and constitute a part of this specification illustrate several aspects described below and together with the description, serve to explain the principles of the invention. Like numbers represent the same elements throughout the figures. The patent or application file contains at least one drawing executed in color. Copies of this patent or patent application publication with color drawing(s) will be provided by the Office upon request and the payment of the necessary fee.
Figure 1 illustrates one aspect of a deconstructed carpet;
Figure 2 shows an enlarged plan view of the deconstructed carpet of Figure 1.
Figure 3 shows an enlarged plan view of the deconstructed carpet of Figure 2.

### DETAILED DESCRIPTION

The present invention can be understood more readily by reference to the following detailed description, examples, drawing, and claims, and their previous and following description. However, before the present devices, systems, and/or methods are disclosed and described, it is to be understood that this invention is not limited to the specific devices, systems, and/or methods disclosed unless otherwise specified, as such can, of course, vary. It is also to be understood that the terminology used herein is for the purpose of describing particular aspects only and is not intended to be limiting.

The following description of the invention is provided as an enabling teaching of the invention in its best, currently known embodiment. To this end, those skilled in the relevant art will recognize and appreciate that many changes can be made to the various aspects of the invention described herein, while still obtaining the beneficial results of the present invention. It will also be apparent that some of the desired benefits of the present invention can be obtained by selecting some of the features of the present invention without utilizing other features. Accordingly, those who work in the art will recognize that many modifications and adaptations to the present invention are possible and can even be desirable in certain circumstances and are a part of the present invention. Thus, the following description is provided as illustrative of the principles of the present invention and not in limitation thereof.

As used throughout, the singular forms "a," "an" and "the" include plural referents unless the context clearly dictates otherwise. Thus, for example, reference to "a needle bar" can include two or more such needle bars unless the context indicates otherwise.

Ranges can be expressed herein as from "about" one particular value, and/or to "about" another particular value. When such a range is expressed, another aspect includes from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

As used herein, the terms "optional" or "optionally" mean that the subsequently described event or circumstance may or may not occur, and that the description includes instances where said event or circumstance occurs and instances where it does not.

As used throughout, the term "carpet tile" refers to carpet tiles and other conventional textile-face modular flooring tiles.

As used herein, the definition of the term "color" is referenced in terms of the CIELAB color scale, which was created by the International Commission on Illumination (CIE). The CIELAB color scale provides a uniform scale for measuring and comparing the color values of different samples. Three different color measurements are used to determine the CIELAB color value of a given sample: 1) a white-black color measurement; 2) a red-green color measurement; and 3) a yellow-blue color measurement. The white-black color measurement represents the amount of white present in the sample relative to the amount of black present in the sample. The red-green color measurement represents the amount of red present in the sample relative to the amount of green present in the sample. The yellow-blue color measurement represents the amount of yellow present in the sample relative to the amount of blue present in the sample. CIELAB color scale values can be obtained using color measurement instruments known in the art, including, for example, HunterLab color measurement instruments.

As used throughout, the terms "tuft", "tufting", "tufted", "tufted-in", and other verb tenses thereof refer to inserting, pressing, passing, and/or any other conventional process by which yarn is attached or otherwise coupled to the carpet backing.

In one aspect, and as shown in Figure 1, a carpet tile 11 is provided having first and second end edges 14a, 14b and first and second side edges 16a, 16b. In this aspect, it is contemplated that the distance between the first and second end edges 14a, 14b of the carpet tile 11 can correspond to a length 18 of the carpet tile. It is further contemplated that the distance between the first and second side edges 16a, 16b of the carpet tile 11 can correspond to a width 19 of the carpet tile.

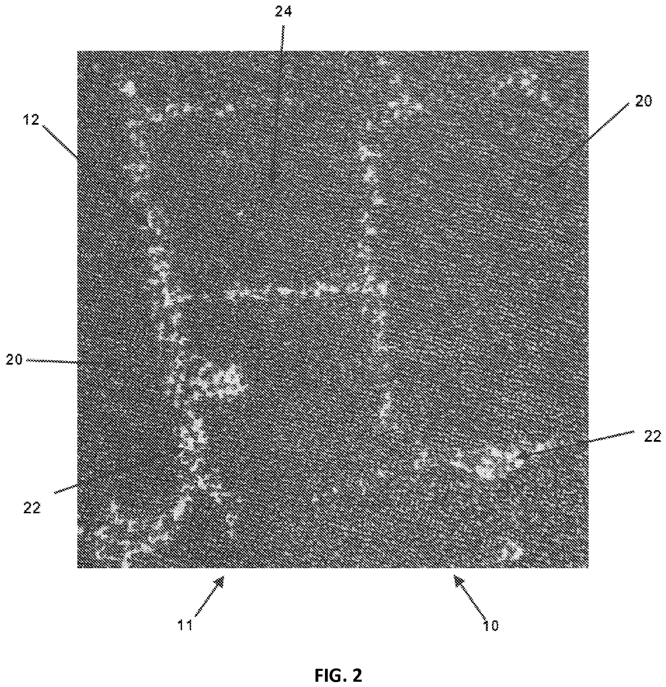

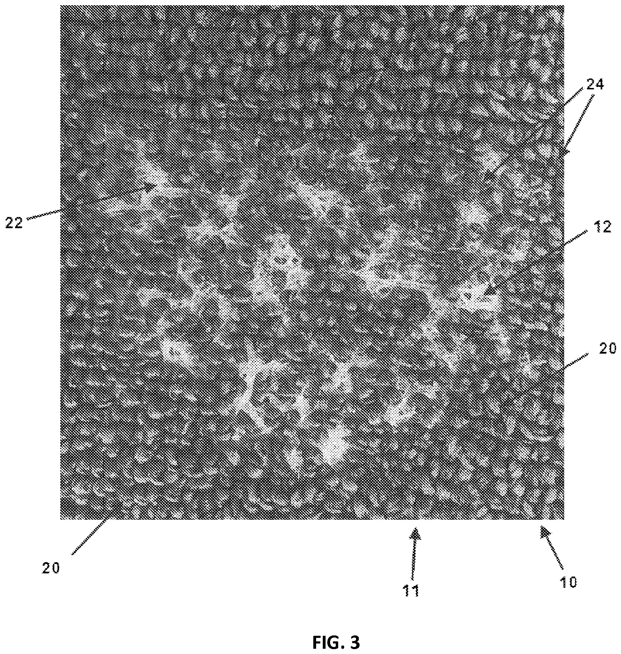

Referring now to the drawings, in which identical numbers indicate identical elements throughout the various views, Figures 1-3 illustrate a first aspect of a tufted carpet 10 having an at least partially visible primary backing 12, hereto referred to as deconstructed carpet 10. Conventionally, primary backing is considered only a structural element of carpet and visible primary backing in carpet is considered to be a defect. However, the present disclosure utilizes the primary backing layer as a design element of the overall pattern and styling in order to reduce material use, waste and the ounce weight of the finished carpet and to improve the method of carpet construction. In one example, in order to expose the primary backing 12, at least some yarn can be pulled very low in the exposed member pattern areas 22 to expose or otherwise make visible to an external viewer, desired amounts of the primary backing layer. It is contemplated that the primary backing layer can have a primary backing color that comprises part of the overall pattern and styling of the deconstructed carpet.

In aspects of the present disclosure, the deconstructed carpet can have the tufting pile heights adjusted over conventional tufted carpet such that a previous medium pile height becomes a low pile height and the previous low pile height becomes very low against the primary backing. It is contemplated that the deconstructed carpet can then be finished similarly to conventional tufted carpet. In light of the present disclosure, one skilled in the art will appreciate that lowering of the pile heights can allow for a reduction in tufted weight. Thus, in another aspect, the tufted weight of the deconstructed carpet can be from about 170.0 grams (6 oz.) to about 708.7 grams (25 oz.), optionally, from about 226.8 grams (8 oz.) to about 453.6 grams (16 oz.), and, more particularly, about 283.5 grams (10 oz.) in a patterned deconstructed carpet.

The deconstructed carpet shown in Figure 1 can be formed by a conventional carpet tufting machine. For example, conventional tufting machine having a single bar of needles or two bars of needles can be used. The deconstructed carpet can be, but does not have to be, manufactured using a conventional carpet tufting machine. Among other alternatives, and not meant to be limiting, the deconstructed carpet may be produced on a carpet tufting machine having 1/4 gauge needle bars, 1/8 gauge needle bars, and/or 10 gauge needle bars. In one exemplary aspect, the desired carpet pattern design (and full and partial repeats thereof, if desired) comprising the one or more tufted portion pattern members 20 and the one or more exposed pattern members 22 can be formed on the deconstructed carpet by controlling the height of the yarn tufts and the "thread-up" of the machine, *i.e*., the arrangement of yarn colors dedicated to the needles of the tufting machine,

Each needle can be threaded with a dedicated yarn type (*e.g.,* single color, space dyed, barber pole, etc.) and color(s). In one example, the color shapes of the tufted portion pattern members are formed on the color web by contrast between adjacent yarn colors on a single needle row and by contrast between the yarn colors on the needle bar or needle bars. Thus, the types and colors of yarn 24 used should be selected to achieve a desired contrast between areas of the desired pattern design of the carpet. For example, at least one color in the one or more tufted portion pattern members should be used to achieve the desired color contrast against the colored primary backing. However, it is optional, but not necessary, to use more than one color to achieve the desired color contrast. For example, the primary backing color should differ from the color therein the tufted portion pattern members in either one of, or a combination of, hue, chroma, and/or value. In one exemplary aspect, the primary backing color differs from the plurality of yarns that form the at least one color in the tufted portion pattern members.

Any thread-up of the machine may be used in accordance with this invention so long as the resultant web forms a carpet in accord with the directed color and texture design of the deconstructed carpet. In aspects, deconstructed carpet allows a singular color yarn to be used and the exposure of the primary backing creates the desired pattern design of the carpet by the color contrast between the color of the yarn and the color of the primary backing. It is also contemplated that multiple colored yarns can be used; however, one skilled in the art will appreciate that in a deconstructed carpet, multiple colored yarns are no longer a requirement to provide pattern.

As noted above, the characteristic of the deconstructed carpet 10 can be further controlled by varying the height of the yarn, *i.e.,* controlling the pile height of the deconstructed carpet. The longer the length of yarn that is pushed through the primary backing, the greater its height in the finished carpet In the exemplary deconstructed carpet, at least some primary backing can be visible in some portions of the tufted portion pattern members, and some areas can show substantially only primary backing.

In other aspects, either broadloom carpet or carpet tiles can be manufactured using the deconstructed carpet. In exemplary aspects, the carpet tile 11 can be substantially rectangular (having a length 18 and a width 19 that are substantially different). It is also contemplated that the carpet tile 11 can be substantially square (having a length 18 and a width 20 that are substantially equal). However, it is contemplated that the carpet tile 11 can have any desired shape, including a desired conventional shape or a desired irregular and/or organic shape. In further exemplary aspects, it is contemplated that the carpet tile 11 can have a tufted face, a woven face, or a fusion-bonded face that is formed according to conventional methods. In an additional exemplary aspect, it is contemplated that at least a portion of the face of the carpet tile 11 can be printed using conventional methods.

Although several embodiments of the invention have been disclosed in the foregoing specification, it is understood by those skilled in the art that many modifications and other embodiments of the invention will come to mind to which the invention pertains, having the benefit of the teaching presented in the foregoing description and associated drawings. It is therefore understood that the invention is not limited to the specific embodiments disclosed herein, and that many modifications and other embodiments of the invention are intended to be included within the scope of the invention. Moreover, although specific terms are employed herein, they are used only in a generic and descriptive sense, and not for the purposes of limiting the described invention.

## Claims

1. A carpet (10) comprising:
a primary backing layer (12) having a top surface and a primary backing color;
a plurality of yarn tufts extending upwardly from the top surface of the primary backing layer (12), wherein in a first area the plurality of yarn tufts cooperate to form at least one pattern member (20) having at least one color and a desired pile height that obscures the underlying top surface of the primary backing layer (12),
**characterised in that** in a second area at least some of the plurality of yarn tufts are pulled low enough to expose portions (22) of the top surface of the primary backing layer (12),
wherein the exposed portions (22) of the primary backing layer cooperate with the at least one pattern member (20) to form an overall color and texture design of the carpet (10).

2. The carpet (10) of Claim 1, wherein the carpet is a broadloom carpet.

3. The carpet (10) of Claim 1, wherein the carpet is a carpet tile (11).

4. The carpet (10) of Claim 1, wherein the primary backing color differs from the at least one color of the at least one pattern member (20) in hue, chroma, and/or value.

5. The carpet (10) of Claim 1 or Claim 4, wherein the at least one color of the at least one pattern member (20) comprises more than one color.

6. The carpet (10) of Claim 1 or Claim 5, wherein the at least one color of the at least one pattern member (20) comprises a single color.

7. The carpet (10) of Claim 5 or Claim 6, wherein the primary backing color differs from the at least one color of the at least one pattern member.

8. The carpet (10) of Claim 1, wherein the pile height of the plurality of yarn tufts in the first area selectively varies over the at least one pattern member (20).

9. The carpet (10) of Claim 1, wherein the tufted weight of the carpet (10) is between 170.0 grams (6 oz) to 708.7 grams (25 oz).

10. The carpet (10) of Claim 1, wherein the tufted weight of the carpet (10) is between 226.8 grams (8 oz) to 453.6 grams (16 oz).

11. The carpet (10) of Claim 1, wherein the tufted weight of the carpet (10) is 283.5 grams (10 oz).

12. A method for forming a carpet (10), comprising:
tufting at least one color yarn in a primary backing layer (12) to extend upwardly from a top surface of the primary backing layer (12), wherein the tufting of the at least one color yarn produces a plurality of yarn tufts extending upwardly from the top surface of the primary backing layer (12), wherein in a first area the plurality of yarn tufts cooperate to form at least one pattern member (20) having at least one color and a desired pile height that obscures the underlying top surface of the primary backing layer (12),
**characterised by** pulling at least some of the plurality of yarn tufts in a second area low enough to expose portions (22) of the top surface of the primary backing layer,
wherein the exposed portions (22) of the primary backing layer (12) cooperate with the at least one pattern member (20) to form an overall color and texture design of the carpet (10).

13. The method of Claim 12, wherein the carpet (10) is a broadloom carpet.

14. The method of Claim 12, wherein the carpet (10) is a carpet tile (11).

15. The method of Claim 12, wherein the primary backing color differs from the at least one color of the at least one pattern member (20) in hue, chroma, and/or value.

16. The method of Claim 15, wherein the primary backing color differs from the at least one color of the at least one pattern member (20).

17. The method of Claim 12, wherein the at least one color yarn comprises a plurality of colored yarns.

18. The method of Claim 17, further comprising selectively varying the pile height of the plurality of yarn tufts in the first area over the at least one pattern member (20).

## Patentansprüche

1. Ein Teppich (10), der Folgendes umfasst:
eine primäre Trägerschicht (12) mit einer Oberseite und einer primären Trägerfarbe;
eine Vielzahl von Garnbüscheln, die sich von der Oberseite der primären Trägerschicht (12) aus nach oben erstrecken, wobei in einem ersten Bereich die Vielzahl von Garnbüscheln zusammenwirkt und mindestens ein Musterelement (20) mit mindestens einer Farbe und einer gewünschten Florhöhe bildet, die die darunter liegende Oberseite der primären Trägerschicht (12) verdeckt,
**dadurch gekennzeichnet, dass** in einem zweiten Bereich mindestens ein Teil der Vielzahl von Garnbüscheln tief genug gezogen wird, dass Teile (22) der Oberseite der primären Trägerschicht (12) freigelegt werden,
wobei die freigelegten Teile (22) der primären Trägerschicht mit dem mindestens einen Musterelement (20) zusammenwirken und ein Gesamtfarben- und -texturdesign des Teppichs (10) bilden.

2. Der Teppich (10) nach Anspruch 1, wobei der Teppich ein Teppich mit Breitwebart ist.

3. Der Teppich (10) nach Anspruch 1, wobei der Teppich eine Teppichfliese (11) ist.

4. Der Teppich (10) nach Anspruch 1, wobei sich die primäre Trägerfarbe von der mindestens einen Farbe des mindestens einen Musterelements (20) in Farbton, Chroma und/oder Wert unterscheidet.

5. Der Teppich (10) nach Anspruch 1 oder Anspruch 4, wobei die mindestens eine Farbe des mindestens einen Musterelements (20) mehr als eine Farbe umfasst.

6. Der Teppich (10) nach Anspruch 1 oder Anspruch 5, wobei die mindestens eine Farbe des mindestens einen Musterelements (20) eine einzige Farbe umfasst.

7. Der Teppich (10) nach Anspruch 5 oder 6, wobei sich die primäre Trägerfarbe von der mindestens einen Farbe des mindestens einen Musterelements unterscheidet.

8. Der Teppich (10) nach Anspruch 1, wobei die Florhöhe der Vielzahl von Garnbüscheln im ersten Bereich über das mindestens eine Musterelement (20) selektiv variiert.

9. Der Teppich (10) nach Anspruch 1, wobei das getuftete Gewicht des Teppichs (10) zwischen 170,0 g (6 oz) und 708,7 g (25 oz) beträgt.

10. Der Teppich (10) nach Anspruch 1, wobei das getuftete Gewicht des Teppichs (10) zwischen 226,8 g (8 oz) und 453,6 g (16 oz) beträgt.

11. Der Teppich (10) nach Anspruch 1, wobei das getuftete Gewicht des Teppichs (10) 283,5 g (10 oz) beträgt.

12. Ein Verfahren zum Bilden eines Teppichs (10), das Folgendes umfasst:
Tuften von mindestens einem Farbgarn in einer primären Trägerschicht (12), so dass es sich von einer Oberseite der primären Trägerschicht (12) aus nach oben erstreckt, wobei das Tuften des mindestens einen Farbgarns eine Vielzahl von Garnbüscheln erzeugt, die sich von der Oberseite der primären Trägerschicht (12) aus nach oben erstrecken, wobei in einem ersten Bereich die Vielzahl von Garnbüscheln zusammenwirkt und mindestens ein Musterelement (20) mit mindestens einer Farbe und einer gewünschten Florhöhe bildet die die darunter liegende Oberseite der primären Trägerschicht (12) verdeckt,
**gekennzeichnet durch** das Ziehen von mindestens einem Teil der Vielzahl von Garnbüscheln in einem zweiten Bereich, der niedrig genug ist, um Teile (22) der Oberseite der primären Trägerschicht freizulegen, wobei die freiliegenden Teile (22) der primären Trägerschicht (12) mit dem mindestens einen Musterelement (20) zusammenwirken und ein Gesamtfarben- und texturdesign des Teppichs (10) bilden.

13. Das Verfahren nach Anspruch 12, wobei der Teppich (10) ein Teppich mit Breitwebart ist.

14. Das Verfahren nach Anspruch 12, wobei der Teppich (10) eine Teppichfliese (11) ist.

15. Das Verfahren nach Anspruch 12, wobei sich die Grundfarbe von der mindestens einen Farbe des mindestens einen Musterelements (20) in Farbton, Chroma und/oder Wert unterscheidet.

16. Das Verfahren nach Anspruch 15, wobei sich die primäre Trägerfarbe von der mindestens einen Farbe des mindestens einen Musterelements (20) unterscheidet.

17. Das Verfahren nach Anspruch 12, wobei das mindestens eine Farbgarn eine Vielzahl von Farbgarnen umfasst.

18. Das Verfahren nach Anspruch 17, das zudem das selektive Variieren der Florhöhe der Vielzahl von Garnbüscheln im ersten Bereich über dem mindestens einen Musterelement (20) umfasst.

## Revendications

1. Un tapis (10) comportant :
une couche de support principale (12) présentant une surface supérieure et une couleur de support principale ;
plusieurs touffes de fil s'étendant vers le haut à partir de la surface supérieure de la couche de support principale (12), dans lequel les touffes de fil s'assemblent pour former au moins un élément de motif (20) dans une première zone, présentant au moins une couleur et une hauteur de poil souhaitée qui obscurcit la surface supérieure sous-jacente de la couche de support principale (12),
**caractérisé par le fait qu'**au moins quelques touffes de fil sont tirées suffisamment bas pour exposer des portions (22) de la surface supérieure de la couche de support principale (12) dans une seconde zone,
dans lequel les portions exposées (22) de la couche de support principale sont associées à au moins un élément de motif (20) pour former la couleur globale et la conception de texture du tapis (10).

2. Le tapis (10) de la revendication 1, le tapis étant un tapis grande largeur.

3. Le tapis (10) de la revendication 1, le tapis étant un carreau de tapis (11).

4. Le tapis (10) de la revendication 1, dans lequel la couleur de support principale diffère d'au moins une couleur d'au moins un élément de motif (20) de par la teinte, la saturation et/ou la valeur.

5. Le tapis (10) de la revendication 1 ou de la revendication 4, dans lequel au moins une couleur d'au moins un élément de motif (20) comprend plusieurs couleurs.

6. Le tapis (10) de la revendication 1 ou de la revendication 5, dans lequel au moins une couleur d'au moins un élément de motif (20) comprend une seule couleur.

7. Le tapis (10) de la revendication 5 ou de la revendication 6, dans lequel la couleur de support principale diffère d'au moins une couleur d'au moins un élément de motif.

8. Le tapis (10) de la revendication 1, dans lequel la hauteur de poil des touffes de fil de la première zone varie sélectivement pour au moins un élément de motif (20).

9. Le tapis (10) de la revendication 1, dans lequel le poids des touffes de fil du tapis (10) est compris entre 170,0 grammes (6 oz) et 708,7 grammes (25 oz).

10. Le tapis (10) de la revendication 1, dans lequel le poids des touffes de fil du tapis (10) est compris entre 226,8 grammes (8 oz) et 453,6 grammes (16 oz).

11. Le tapis (10) de la revendication 1, dans lequel le poids des touffes de fil du tapis (10) est égal à 283,5 grammes (10 oz).

12. Un procédé de fabrication de tapis (10), consistant à :
touffeter au moins un fil de couleur dans une couche de support principale (12) pour l'étendre vers le haut à partir de la surface supérieure de la couche de support principale (12), dans lequel le touffettage d'au moins un fil de couleur produit plusieurs touffes de fil s'étendant vers le haut à partir de la surface supérieure de la couche de support principale (12), dans lequel les touffes de fil s'assemblent pour former au moins un élément de motif (20) dans une première zone, présentant au moins une couleur et une hauteur de poil souhaitée qui obscurcit la surface supérieure sous-jacente de la couche de support principale (12),
**caractérisé par le fait qu'**au moins quelques touffes de fil sont tirées suffisamment bas pour exposer des portions (22) de la surface supérieure de la couche de support principale dans une seconde zone, dans lequel les portions exposées (22) de la couche de support principale (12) sont associées à au moins un élément de motif (20) pour former la couleur globale et la conception de texture du tapis (10).

13. Le procédé de la revendication 12, dans lequel le tapis (10) est un tapis grande largeur.

14. Le procédé de la revendication 12, dans lequel le tapis (10) est un carreau de tapis (11).

15. Le procédé de la revendication 12, dans lequel la couleur de support principale diffère d'au moins une couleur d'au moins un élément de motif (20) de par la teinte, la saturation et/ou la valeur.

16. Le procédé de la revendication 15, dans lequel la couleur de support principale diffère d'au moins une couleur d'au moins un élément de motif (20).

17. Le procédé de la revendication 12, dans lequel au moins un fil de couleur comprend plusieurs fils de couleur.

18. Le procédé de la revendication 17, consistant en outre à varier sélectivement la hauteur de poil des touffes de fil de la première zone pour au moins un élément de motif (20).
